# EUROPÄISCHE PATENTANMELDUNG

(11) **EP 2 682 657 A1**
(43) Veröffentlichungstag der Anmeldung: **08.01.2014**
(21) Anmeldenummer: 13173512.8
(22) Anmeldetag: 25.06.2013
(51) Int. Cl.: F16L 5/04, A62C 2/06, A62C 3/16, F16B 15/00, H02G 3/04, H02G 3/22

(54) **Brandschutzmanschette**

(30) Priorität: 03.07.2012 DE 102012211562
(71) Anmelder: HILTI Aktiengesellschaft, 9494 Schaan (LI)
(72) Erfinder: Münzenberger, Herbert, 65191 Wiesbaden (DE)

(57) **Zusammenfassung**

Eine Brandschutzmanschette (10) hat ein Trägerband (12), eine Intumeszenzauflage (16), die auf einer Innenfläche (14) entlang des Trägerbands (12) verläuft und mit diesem verbunden ist, wobei auf der der Intumeszenzauflage (16) abgewandten Außenfläche des Trägerbands (12) mehrere in einer Längsrichtung (L) voneinander beabstandete Aussparungen (26) vorgesehen sind, sowie eine insbesondere aus einem Blech bestehende Verschlussklammer (22), die zumindest zwei Haken (32) aufweist, die in die Aussparungen (26) eingreifen können.

## Beschreibung

Die Erfindung betrifft eine Brandschutzmanschette mit einem Trägerband und einer Intumeszenzauflage, die auf der Innenfläche entlang des Trägerbandes verläuft und mit diesem verbunden ist.

Brandschutzmanschetten werden verwendet, um einen Durchbruch in einer Wand oder Decke, durch die Rohre oder Kabel geführt sind, möglichst dicht zu verschließen, um eine Ausbreitung von Feuer oder Rauch zu verhindern. Dazu wird eine solche Brandschutzmanschette am oder im Durchbruch um das Rohr oder das Kabel gelegt. Die Brandschutzmanschette hat ein formstabiles Trägerband, das der Positionierung der Brandschutzmanschette dient, sowie eine Intumeszenzauflage, die sich bei Hitzeeinwirkung ausdehnt und den Durchbruch verschließt. Die Intumeszenzauflage kann auf das Trägerband aufgeklebt oder aufgeschäumt sein.

Um eine individuelle Anpassung an die Anzahl oder Größe der in der Wand oder dem Deckendurchbruch vorhandenen Rohre, Kabelstränge etc. zu ermöglichen, sind aus dem Stand der Technik Brandschutzmanschetten bekannt, die als Endlosmaterial angeliefert werden und vor Ort auf die gewünschte Länge gekürzt werden können. Eine solche Brandschutzmanschette ist beispielsweise aus der EP 1 181 481 B1 bekannt.

Um vor Ort die Montage der Brandschutzmanschette zu erleichtern, sind beispielsweise am Trägerband integrierte Verschlusselemente vorgesehen, mittels denen ein Schließen der Brandschutzmanschette möglich ist. Alternativ oder zusätzlich sind an der Wand oder der Decke Haken vorgesehen, in die die Brandschutzmanschette eingeschoben und somit lagefest fixiert werden kann.

Solche Verschluss- oder Verankerungssysteme sollen eine sichere Fixierung und Verankerung der Brandschutzmanschette sicherstellen, sodass diese sich nicht verschieben kann, wodurch es zu Funktionseinbußen kommen könnte. Zudem soll die Ausdehnung des Intumeszenzmaterials im Brandfall so wenig wie möglich behindert werden, sodass ein vollständiges und schnelles Abdichten des Durchbruchs möglich ist. Darüber hinaus soll die Brandschutzmanschette einfach zuzuschneiden sein, sodass eine schnelle Verarbeitung auf der Baustelle möglich ist.

Die Herstellung des Trägerbandes und somit der Brandschutzmanschette wird allerdings durch Verschlusselemente, die in das Trägerband integriert sind, wesentlich aufwendiger. Zudem kann das Trägerband nicht beliebig gekürzt werden. Zusätzliche Verankerungselemente können nur verwendet werden, wenn die Brandschutzmanschette in den Durchbruch eingeschoben wird.

Aufgabe der Erfindung ist es, eine Brandschutzmanschette bereitzustellen, die ein einfaches Schließen der Brandschutzmanschette unabhängig vom gewünschten Durchmesser oder der gewünschten Länge der Brandschutzmanschette ermöglicht.

Zur Lösung der Aufgabe ist eine Brandschutzmanschette vorgesehen, mit einem Trägerband, einer Intumeszenzauflage, die auf einer Innenfläche entlang des Trägerbandes verläuft und mit diesem verbunden ist, wobei auf der der Intumeszenzauflage abgewandten Außenfläche des Trägerbandes mehrere in einer Längsrichtung voneinander beabstandete Aussparungen vorgesehen sind, und mit einer insbesondere aus einem Blech bestehenden Verschlussklammer, die mindestens zwei Haken aufweist, die in die Aussparungen eingreifen können. Die Form der Aussparung ist nicht beschränkt. Die Aussparungen können beispielsweise in Form von Schlitzen oder Löchern ausgebildet sein, wobei aber auch andere Formen denkbar und möglich sind.

Da am Trägerband lediglich Aussparungen vorgesehen sind, ist dieses einfach herzustellen und kann, da keine vorstehenden Elemente vorhanden sind, platzsparend aufgewickelt werden. Das Trägerband mit der darin befestigten Intumeszenzauflage kann auf das gewünschte Maß gekürzt und zusammengerollt werden. Anschließend wird von außen eine Verschlussklammer in die Öffnungen eingeschoben und somit die Brandschutzmanschette geschlossen.

Gegenüber anderen Verschlussmöglichkeiten bietet dies zudem den Vorteil, dass das Trägerband beim Ausdehnen der Intumeszenzauflage ausschließlich in Umfangsrichtung belastet wird, also nur Zugspannungen auf das Trägerband wirken. Scherbelastungen, die insbesondere im Bereich des Verschlusses auftreten können, werden vollständig von der Klammer aufgenommen. Das Trägerband kann somit aus einem dünneren Material hergestellt werden. Dies hat den Vorteil, dass das Trägerband wesentlich flexibler ist und ein Ablängen des Trägerbands auf die gewünschte Länge wesentlich einfacher möglich ist. Das Trägerband kann beispielsweise so dünn hergestellt werden, dass die bisher verwendeten Schneidzonen mit einer Materialschwächung nicht mehr erforderlich sind, wodurch der Herstellungsaufwand für das Trägerband zusätzlich reduziert werden kann. Zudem ist eine genauere Anpassung der Brandschutzmanschette möglich, da das Trägerband an einer beliebigen Position unabhängig von Schneidezonen gekürzt werden kann.

Die Verschlussklammer weist vorzugsweise einen im Wesentlichen flachen Grundkörper auf, und die Haken stehen in einer Vormontageposition im Wesentlichen rechtwinklig vom Grundkörper ab. Somit können die Haken in radialer Richtung in die Aussparungen eingeschoben und am Band fixiert werden. Nach dem Einschieben der Verschlussklammer liegt der Grundkörper flach auf dem Trägerband auf, sodass dieser nicht oder nur geringfügig über die Brandschutzmanschette bzw. das Trägerband vorsteht. Dies erleichtert insbesondere das Einschieben der Brandschutzmanschette in einen Durchbruch, da außenseitig keine Vorsprünge vorhanden sind, mit denen die Brandschutzmanschette hängen bleiben kann.

Die Haken sind beispielsweise in einer Endmontageposition in einem spitzen Winkel zum Grundkörper umgebogen und insbesondere in der Endmontageposition annähernd parallel zum Grundkörper gebogen. Nach dem Einführen in die Aussparungen werden die Haken also so gebogen, dass diese nicht aus den Aussparungen herausrutschen können. Dies wäre nur möglich, wenn die Ränder des Trägerbandes aufeinander zu verschoben werden, sodass der Abstand zwischen den Aussparungen, in die die Haken eingreifen, verkürzt wird. Dies wird aber durch das Trägerband sowie die Intumeszenzauflage verhindert. Dehnt sich die Intumeszenzauflage aus, erhöht sich zudem die Spannung auf die Verschlussklammer, wodurch diese zusätzlich gesichert ist.

Um die Haken möglichst einfach umbiegen zu können, weisen die Haken vorzugsweise eine insbesondere längliche Aufnahme für ein Werkzeug auf. Diese erleichtert das Umbiegen der Haken in der Zwischenmontageposition, in der die Haken in die Aussparungen eingeschoben und somit von außen nicht erreichbar sind. Das Werkzeug kann radial in das rund verlaufende Band und in Längsrichtung in die Aufnahme eingeschoben werden, sodass das Werkzeug in Längsrichtung am jeweiligen Haken gehalten ist. Durch Verschwenken des Werkzeugs kann der Haken einfach umgebogen werden. Das Werkzeug kann ein übliches Werkzeug sein, wie beispielsweise ein Schraubenzieher, eine Schere, ein Werkzeug mit einem flachen und breiten Element, das in die Aufnahmen eingreifen kann.

Die Aufnahme verläuft beispielsweise parallel zur Hakenebene. Insbesondere bildet die Aufnahme durch entgegengesetzte, aufeinander zu gebogene Ränder des Hakens eine Tasche. Diese Tasche bzw. Aufnahme ist beispielsweise so ausgebildet, dass ein Werkzeug, beispielsweise ein Schraubendreher, in radialer Richtung in die Verschlussklammer bzw. die Aufnahme eingeschoben werden kann. Anschließend kann das Werkzeug so bewegt werden, dass der Haken in die Endmontageposition umgebogen wird, wobei das Werkzeug schließlich annähernd tangential zum Trägerband verschwenkt ist. Anschließend kann das Werkzeug aus der Tasche herausgezogen werden. Die Tasche kann insbesondere so ausgebildet sein, dass eine Beschädigung des darunterliegenden Intumeszenzmaterials durch das Werkzeug ausgeschlossen ist, weil sich die Tasche zum Beispiel zum freien Ende verjüngt oder geschlossen ist.

In einer alternativen Ausführungsform der Verschlussklammer kann das Werkzeug zum Umbiegen der Haken der Verschlussklammer fest oder lösbar mit den Haken und/oder der Aufnahme verbunden sein. Bevorzugt ist, das Werkzeug als längliches, rechteckiges Blech ausgebildet, das in einer Vormontageform über die Ebene des Verschlusses hinausragt und fest oder lösbar, insbesondere lösbar mit den Haken bzw. der Aufnahme verbunden ist.

Um ein einfaches Bewegen der Haken in die Endmontageposition zu ermöglichen, ist es erforderlich, dass die Intumeszenzauflage im Bereich der Haken dem Umbiegen keinen großen Widerstand entgegensetzt. Dies kann beispielsweise dadurch erfolgen, dass die Intumeszenzauflage zumindest im Bereich der Aussparungen aus einem nachgiebigen Schaumstoffmaterial besteht, das vom Haken beim Umbiegen einfach verdrängt oder komprimiert werden kann. Nachgiebig bedeutet dabei, dass das Material weich und elastisch ist, so dass es sich ohne großen Kraftaufwand verbiegen und verformen lässt und seine ursprüngliche Form wieder annehmen kann, wenn keine Verformungskräfte mehr auf das Material wirken.

Es ist aber auch denkbar, dass die Intumeszenzauflage im Bereich der Aussparungen zum Trägerband weisende Vertiefungen, insbesondere in Längsrichtung verlaufende Nuten aufweist. In dem Bereich, in dem die Haken eingreifen können, ist also keine Intumeszenzauflage vorgesehen bzw. eine Nut oder Vertiefung gebildet, sodass der Haken nicht mit der Intumeszenzauflage in Berührung kommt und somit keine Behinderung beim Umbiegen durch die Intumeszenzauflage darstellt.

Diese Nuten können sich auch durch die gesamte Dicke der Intumeszenzauflage erstrecken und diese in Längsrichtung in mehrere Intumeszenzstreifen unterteilen. Dadurch ist der Haken bzw. die Verschlussklammer auch von innen erreichbar, sodass dieser auch von innen umgebogen werden kann.

Vorzugsweise weist die Intumeszenzauflage quer zur Längsrichtung verlaufende Rippen auf. Die Rippen erstrecken sich über die gesamte Breite der Intumeszenzauflage. Diese Rippen definieren zum einen Schneidbereiche, die zum einfachen Ablängen des Trägerbandes bzw. der Intumeszenzauflage dienen. Zudem können die Rippen aber auch Faltbereiche bilden, die ein einfaches Rollen der Manschette ermöglichen. Wären diese Rippen nicht vorhanden, würde vor allem bei kleineren Rohrdurchmessern die Intumeszenzauflage beim Zusammenrollen um das Rohr oder die Leitung auf der Innenseite stark gestaucht. Dies wird durch die Rippen verhindert. Die Größe der Rippen bzw. der Winkel zwischen den Rippen kann abhängig vom maximalen oder gewünschten Durchmesser der Brandschutzmanschette gewählt werden. Gegebenenfalls vorhandene Lücken zwischen den Rippen werden im Brandfall durch das Ausdehnen der Intumeszenzauflage geschlossen.

Vorzugsweise liegen die Aussparungen zwischen den Rippen, was das Einführen der Haken erleichtert.

Die Ausbreitung der Intumeszenzauflage wird durch das Trägerband behindert. Um eine bessere Abdichtung des Wanddurchbruchs zu ermöglichen, kann deshalb auf der Außenseite des Trägerbandes eine zweite Intumeszenzauflage vorgesehen sein. Diese kann zudem eine Vibrationsentkopplung der Leitung bzw. des Rohres vom Untergrund bilden. Vorzugsweise ist diese zweite Intumeszenzauflage aus Streifen gebildet und so verlegt, dass Aussparungen im Trägerband freigehalten werden, um die Verschlussklammer einsetzen zu können.

Üblicherweise wird für das Trägerband ein Metallband verwendet, insbesondere ein Metallblech. Es ist aber auch denkbar, dass das Trägerband aus Kunststoff, insbesondere einem glasfaserverstärkten Kunststoff besteht.

Weitere Vorteile und Merkmale ergeben sich aus der nachfolgenden Beschreibung in Verbindung mit den beigefügten Zeichnungen. In diesen zeigen:
- Figur 1: eine schematische Darstellung einer erfindungsgemäßen Brandschutzmanschette,
- Figuren 2a und 2b: eine Seitenansicht sowie eine perspektivische Ansicht eines Trägerbandes mit darauf befestigter Intumeszenzauflage zur Herstellung der Brandschutzmanschette aus Figur 1,
- Figur 3: den Verschlussbereich der Brandschutzmanschette aus Figur 1,
- Figuren 4a bis 4c: die Verschlussklammer der Brandschutzmanschette aus Figur 1 in verschiedenen Positionen der Montage,
- Figur 5: eine perspektivische Ansicht einer ersten Ausführungsform einer erfindungsgemäßen Brandschutzmanschette,
- Figur 6: eine perspektivische Ansicht einer zweiten Ausführungsform einer erfindungsgemäßen Brandschutzmanschette,
- Figur 7: eine perspektivische Ansicht einer dritten Ausführungsform einer erfindungsgemäßen Brandschutzmanschette, und
- Figur 8: einen Querschnitt durch eine vierte Ausführungsform einer erfindungsgemäßen Brandschutzmanschette.

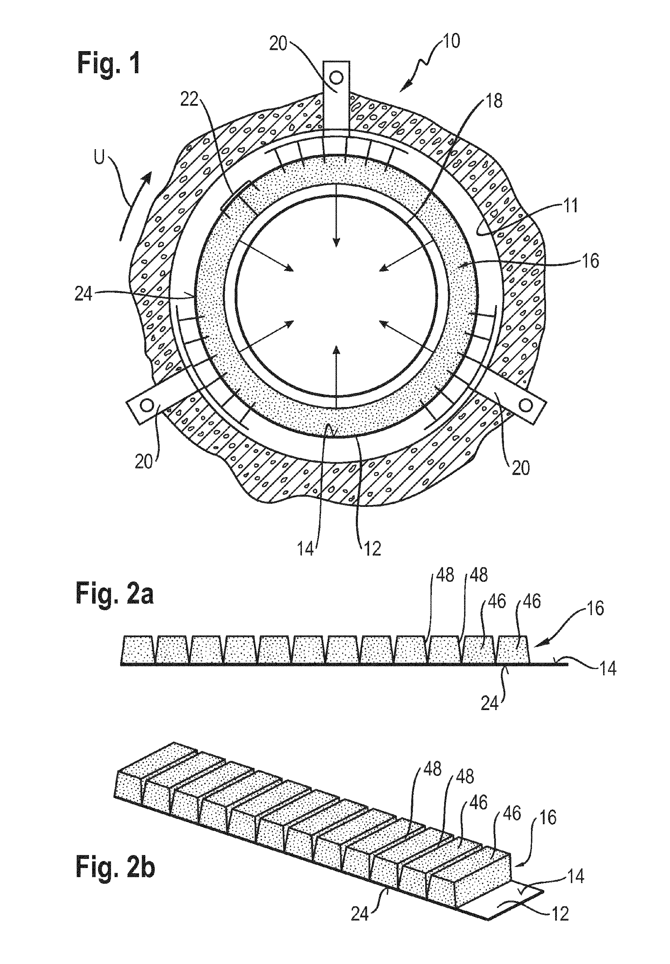

In Figur 1 ist eine Brandschutzmanschette 10 zum Verschließen eines Durchbruchs 11 in einer Wand oder einer Decke gezeigt. Die Brandschutzmanschette 10 hat ein in Umfangsrichtung U umlaufendes Trägerband 12, das aus einem Metallblech oder aus Kunststoff, beispielsweise einem glasfaserverstärkten Kunststoff hergestellt ist. Auf der Innenfläche 14 des Trägerbands 12 ist eine Intumeszenzauflage 16 befestigt. Die Intumeszenzauflage 16 ist beispielsweise aufgeklebt oder aufgeschäumt, sie kann aber auch auf andere Weise am Trägerband 12 befestigt sein.

Das Trägerband 12 mit der darauf befestigten Intumeszenzauflage 16 wird aus einem Endlosmaterial, wie es in den Figuren 2a und 2b schematisch dargestellt ist, hergestellt. Das Trägerband 12 wird mit der darauf befestigten Intumeszenzauflage 16 angeliefert und vor Ort auf die gewünschte Länge abgeschnitten.

Anschließend wird das Trägerband 12 mit der Intumeszenzauflage 16 um ein Rohr 18 oder eine Leitung herum gelegt und am oder im Durchbruch 11 befestigt. Zur Befestigung am Durchbruch 11 sind Haltemittel 20 vorgesehen, die am Außenumfang des Trägerbands 12 angreifen und an der Wand oder der Decke befestigt werden können.

Kommt es, beispielsweise aufgrund eines Brandes, zu einer großen Hitzeentwicklung, dehnt sich die Intumeszenzauflage 16 aus. Dadurch wird der Durchbruch 11 dicht verschlossen, sodass ein Durchtritt von Rauch oder Feuer durch den Durchbruch 11 verhindert ist.

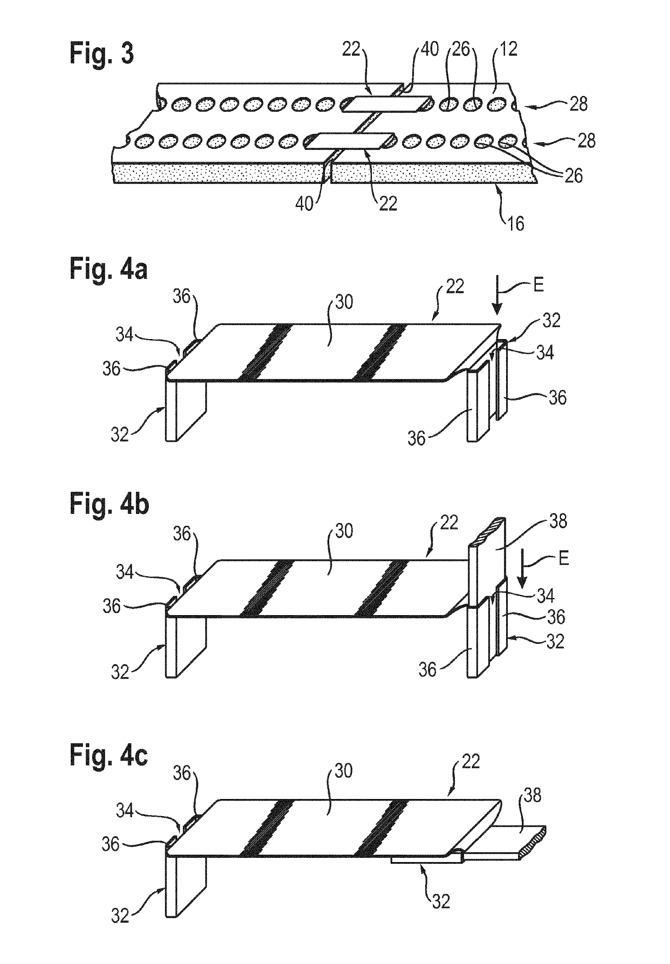

Das Trägerband 12 wird in Umfangsrichtung U durch eine oder mehrere Verschlussklammern 22 geschlossen (siehe auch Figur 3).

Auf der radialen Außenfläche 24 des Trägerbands 12 sind dazu mehrere in Längsrichtung L beabstandete, schlitzförmige Aussparungen 26 vorgesehen, in die die Verschlussklammer 22, wie im Folgenden dargestellt wird, eingreifen kann. Im hier gezeigten Ausführungsbeispiel sind zwei parallel verlaufende Reihen 28 mit Aussparungen 26 vorgesehen, wobei für jede Reihe 28 eine Verschlussklammer 22 vorgesehen ist. Es sind aber auch Ausführungsformen mit nur einer Verschlussklammer 22, also nur einer Reihe 28 Aussparungen möglich oder, falls die Brandschutzmanschette einen längeren Rohrabschnitt schützen soll, mit mehreren Reihen 28.

Die Verschlussklammer 22 ist beispielsweise aus einem Metallblech gebildet und weist einen im Wesentlichen flachen Grundkörper 30 auf. An jedem Längsende des Grundkörpers 30 ist ein Haken 32 vorgesehen, der in der in Figur 4a gezeigten Vormontageposition im Wesentlichen rechtwinklig vom Grundkörper 30 absteht.

An jedem Haken 32 ist eine längliche Aufnahme 34 vorgesehen, die durch die entgegengesetzten Ränder 36 des Hakens 32 gebildet sind, die aufeinander zu gebogen sind und somit eine Tasche bilden, die in Längsrichtung offen ist. In diese Tasche kann in eine Einschubrichtung E ein flaches Werkzeug 38, beispielsweise ein Schraubendreher, eingeschoben werden (Figur 4b).

Nachdem das Trägerband 12 mit der Intumeszenzauflage 16 um das Rohr 18 gelegt wurde, wird die Verschlussklammer 22 mit den Haken 32 in radialer Richtung so auf das Trägerband aufgesetzt, dass die Haken 32 in zwei Aussparungen 26 ragen.

Nach dem Einsetzen der Haken 32 in die Aussparungen 26 des Trägerbands 12 werden die Haken 32 durch Verschwenken des Werkzeug 38 so aufeinander zu umgebogen, dass diese in einem spitzen Winkel zum Grundkörper verlaufen und in einer Endmontageposition (Figur 4c) annähernd parallel zum Grundkörper 30 umgebogen sind.

Sind beide Haken 32 aufeinander zu umgebogen, ist das Trägerband sicher verschlossen. Ein Öffnen des Trägerbands 12 wäre nur möglich, wenn die Haken 32 aufgebogen werden oder die Ränder 40 des Trägerbands 12 aufeinander zu bewegt werden, sodass die Haken 32 aus den Aussparungen 26 herausrutschen können. Dies ist aber nicht möglich, da die Ränder 40 aneinander anliegen bzw. ein Verschieben auch durch die Intumeszenzauflage 16 verhindert wird. Somit ist die Brandschutzmanschette 10 in Umfangsrichtung durch die Verschlussklammer 22 sicher verschlossen.

Dehnt sich die Intumeszenzauflage 16 aufgrund von starker Wärmeentwicklung aus, wird das Trägerband von dieser radial nach außen gedrückt und in Umfangsrichtung U gespannt. Das Trägerband wird also in Umfangsrichtung U auf Zug belastet. Scherbelastungen aufgrund dieses Ausdehnens treten nur an der Verschlussklammer 22 auf. Das Trägerband 12 kann also wesentlich dünner dimensioniert werden.

Dies bietet den Vorteil, dass das Material des Trägerbands 12 so dünn gewählt werden kann, dass ein Ablängen des Trägerbands 12 auf die gewünschte Länge mit einfachen Mitteln möglich ist. Im Trägerband 12 müssen keine zusätzlichen Schwächungszonen oder Schneidezonen vorgesehen sein.

Um ein einfaches Umbiegen der Haken 32 der Verschlussklammer 22 zu ermöglichen, ist es erforderlich, dass die Intumeszenzauflage dem Umbiegen der Haken keinen zu großen Widerstand entgegensetzt.

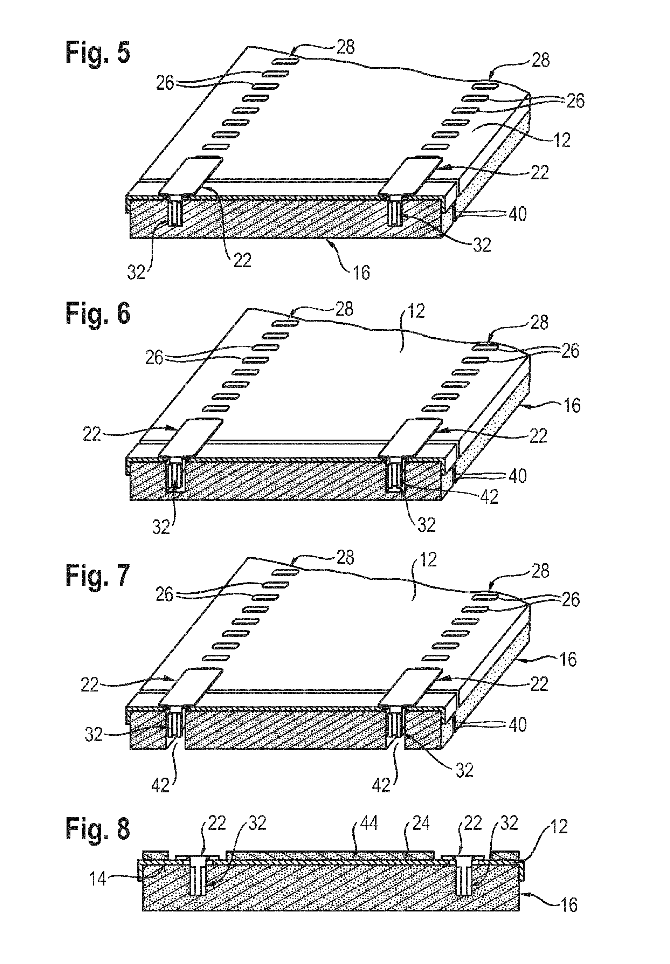

Dies kann beispielsweise dadurch erreicht werden, dass die Intumeszenzauflage 16 zumindest im Bereich der Aussparungen 26 aus einem flexibel nachgiebigen Schaumstoffmaterial besteht, das einfach von den Haken verdrängt bzw. komprimiert werden kann (Figur 5).

Alternativ können aber auch in der Intumeszenzauflage 16 Nuten 42 vorgesehen sein, die zum Trägerband 12 weisen, sodass im Eingriffsbereich der Verschlussklammer 22 bzw. der Haken 32 keine Intumeszenzauflage vorhanden ist (Figur 6). Statt der Nuten können auch punktuell an jeder Aussparung Vertiefungen vorgesehen sein.

In der in Figur 7 gezeigten Ausführungsform erstrecken sich die Nuten 42 in radialer Richtung durch die gesamte Intumeszenzauflage 16, sodass die Haken 32 auch von innen erreichbar sind.

Da sich die Intumeszenzauflage bei Wärmeentwicklung stark ausdehnt, werden solche Nuten 42 oder Vertiefungen im Brandfall geschlossen, sodass die Funktion der Brandschutzmanschette sichergestellt ist. Die Intumeszenzauflage quillt um das Band 12 herum, sodass die Intumeszenzauflage den gesamten Spalt schließt.

Durch das Trägerband 12 wird die Ausdehnung der Intumeszenzauflage 16 nach außen mehr oder weniger stark behindert. Auf der Außenseite des Trägerbands 12 kann gegebenenfalls eine zweite Intumeszenzauflage 44 vorgesehen sein (Figur 8). Diese kann sich besser radial nach außen ausdehnen und so außerhalb des Trägerbandes eine weitere zuverlässige Abdichtung des Durchbruchs 11 sicherstellen. Bei dieser Intumeszenzauflage ist darauf zu achten, dass die Aussparungen 26 freigehalten werden, sodass ein einfaches Einsetzen der Verschlussklammer 22 möglich ist.

Wie in Figur 2 zu sehen ist, ist die Intumeszenzauflage 16 in Längsrichtung in mehrere quer zur Längsrichtung verlaufende Rippen 46 unterteilt. Zwischen den Rippen 46 sind Fugen 48 vorgesehen, die sich bis zum Trägerband 12 erstrecken. Im Bereich der Fugen 48 liegen die Aussparungen 26.

Durch die Rippen 46 ist ein einfaches Aufrollen des Trägerbands 12 mit der daran befestigten Intumeszenzauflage 16 möglich. Wären diese Rippen nicht vorhanden, würde das Material der Intumeszenzauflage 16 beim Zusammenrollen gestaucht, wodurch das Zusammenrollen der Brandschutzmanschette 10 erschwert werden würde.

Die Fugen 48 zwischen den Rippen 46 sind vorzugsweise so ausgebildet, dass diese beim Zusammenrollen des Trägerbands 12 um das Rohr 18 oder die Leitung geschlossen werden, also benachbarte Rippen 46 aneinander anliegen. Zwischen den Rippen 46 vorhandene Hohlräume werden durch das sich ausdehnende Material der Intumeszenzauflage 16 verschlossen.

## Patentansprüche

1. Brandschutzmanschette (10) mit einem Trägerband (12), einer Intumeszenzauflage (16), die auf einer Innenfläche (14) entlang des Trägerbands (12) verläuft und mit diesem verbunden ist, wobei das Trägerband (12) mit mehreren in einer Längsrichtung (L) voneinander beabstandeten Aussparungen (26) versehen sind, und mit einer Verschlussklammer (22), die zumindest zwei Haken (32) aufweist, die in die Aussparungen (26) eingreifen können.

2. Brandschutzmanschette nach Anspruch 1, **dadurch gekennzeichnet, dass** die Verschlussklammer (22) einen im Wesentlichen flachen Grundkörper (30) aufweist und die Haken (32) in einer Vormontageposition im Wesentlichen rechtwinklig vom Grundkörper (30) abstehen.

3. Brandschutzmanschette nach Anspruch 2, **dadurch gekennzeichnet, dass** die Haken (32) in einer Endmontageposition in einem spitzen Winkel zum Grundkörper (30) umgebogen sind und insbesondere in der Endmontageposition annähernd parallel zum Grundkörper (30) umgebogen sind.

4. Brandschutzmanschette nach einem der vorhergehenden Ansprüche, **dadurch gekennzeichnet, dass** die Haken (32) eine Aufnahme (34) für ein Werkzeug (38) aufweisen.

5. Brandschutzmanschette nach Anspruch 4, **dadurch gekennzeichnet, dass** die Aufnahme (34) parallel zur Hakenebene verläuft und insbesondere durch entgegengesetzte, aufeinander zu gebogene Ränder (36) des Hakens (32) eine Tasche gebildet ist.

6. Brandschutzmanschette nach einem der vorhergehenden Ansprüche, **dadurch gekennzeichnet, dass** die Intumeszenzauflage (16) zumindest im Bereich der Aussparungen (26) aus einem nachgiebigen Schaumstoffmaterial besteht.

7. Brandschutzmanschette nach einem der vorhergehenden Ansprüche, **dadurch gekennzeichnet, dass** die Intumeszenzauflage (16) im Bereich der Aussparungen (26) auf der dem Trägerband (12) zugewandten Fläche wenigstens eine in Längsrichtung (L) verlaufende Nut (42) aufweist.

8. Brandschutzmanschette nach Anspruch 7, **dadurch gekennzeichnet, dass** sich die wenigstens eine Nut (42) durch die gesamte Dicke der Intumeszenzauflage (16) erstreckt und diese in Längsrichtung (L) in mehrere Intumeszenzstreifen unterteilt.

9. Brandschutzmanschette nach einem der vorhergehenden Ansprüche, **dadurch gekennzeichnet, dass** die Intumeszenzauflage (16) auf der dem Trägerband (12) abgewandten Seite quer zur Längsrichtung (L) verlaufende Vertiefungen zur Ausbildung von Rippen (46) aufweist.

10. Brandschutzmanschette nach einem der vorhergehenden Ansprüche, **dadurch gekennzeichnet, dass** auf der Außenfläche des Trägerbands (12) eine zweite Intumeszenzauflage (44) vorgesehen ist.

11. Brandschutzmanschette nach einem der vorhergehenden Ansprüche, **dadurch gekennzeichnet, dass** das Trägerband (12) aus Metall oder aus Kunststoff besteht.
